# EUROPÄISCHE PATENTANMELDUNG

(11) **EP 4 537 926 A1**
(43) Veröffentlichungstag der Anmeldung: **16.04.2025**
(21) Anmeldenummer: 23202379.6
(22) Anmeldetag: 09.10.2023
(51) Int. Cl.: B01D 53/22

(54) **VORRICHTUNG ZUR AUFTRENNUNG EINES GASGEMISCHES**

(71) Anmelder: Axiom angewandte Prozeßtechnik Ges.m.b.H., 2443 Ebreichsdorf (AT)
(72) Erfinder: Die Erfindernennung liegt noch nicht vor
(74) Vertreter: SONN Patentanwälte GmbH & Co KG

(57) **Zusammenfassung**

Die Erfindung betrifft eine Vorrichtung zur Auftrennung eines Gasgemisches in Produktgas und Offgas mittels Gaspermeation mit einer ersten Membraneinheit (1), welche erste Membraneinheit (1) einen Gaseingang (1a), einen Retentatausgang (1b) und einen ersten Permeatausgang (1c) aufweist, wobei die erste Membraneinheit (1) mindestens einen weiteren, vom Gaseingang (1a) stromabwärtsliegenden Permeatausgang (1c') aufweist und der stromabwärtsliegende Permeatausgang (1c') direkt oder indirekt mit dem Gaseingang (1a) der ersten Membraneinheit (1) leitungsmäßig verbunden ist, sodass ein Gasstrom zumindest teilweise vom stromabwärtsliegenden Permeatausgang (1c') in den Gaseingang (1a) der ersten Membraneinheit (1) rückgeführt werden kann, wobei am oder nach dem Retentatausgang (1b) eine Druckregeleinrichtung (2) vorgesehen ist, wobei die Vorrichtung einen der ersten Membraneinheit (1) nachgeschalteten, vorzugsweise drehzahlregelbaren Verdichter (3) aufweist, wobei der Verdichter (3) ansaugseitig mit dem stromabwärtsliegenden Permeatausgang (1c') verbunden ist und zum Abzug des Permeats über den stromabwärtsliegenden Permeatausgang (1c') eingerichtet ist. Die Erfindung betrifft weiters ein Verfahren zur Auftrennung eines Gasgemisches in Produktgas und Offgas mittels Gaspermeation.

## Beschreibung

Die vorliegende Erfindung betrifft eine Vorrichtung und ein Verfahren zur Auftrennung eines Gasgemisches in Produktgas und Offgas mittels Gaspermeation.

Bei Gaspermeationsmembraneinheiten erfolgt die Trennung von Produktgas und Offgas mittels Permeation, wobei ein beispielsweise an Produktgas angereichertes Retentat und ein an Offgas angereichertes Permeat gewonnen werden können. Die Konzentrationen an Produktgas im Retentat und Offgas im Permeat sind unter anderem von den jeweils angewendeten Prozess-Parametern abhängig, generell ist für eine erhöhte Produktgas-Qualität immer ein erhöhter Energieeinsatz erforderlich (wegen höherem Druck, niedrigerer Ausbeute in Bezug auf eingesetztes Feedgas, etc.). Verbesserte Verfahren zur Steigerung der Produktgas-Ausbeute oder zur effizienteren Nutzung von Energie im Zuge eines derartigen Verfahrens sind daher wünschenswert. Auch ist es wünschenswert, die bei der Errichtung einer Gaspermeationsanlage anfallenden Investitionskosten möglichst gering zu halten.

Üblicherweise sind Vorrichtungen zur Auftrennung eines Gasgemisches in Produktgas und Offgas mittels Gaspermeation derart aufgebaut, dass das druckbeaufschlagte Feedgas in einer Membraneinheit in das Retentat und in das Permeat aufgetrennt werden, wobei beispielsweise das Retentat das Produktgas und das Permeat das Offgas enthält.

Verbesserte Vorrichtungen und Verfahren zur Auftrennung eines Gasgemisches mittels Gaspermeation sind aus dem Patent EP 3 180 104 B1 bekannt. Darin wird eine Vorrichtung mit einer Membraneinheit offenbart, welche neben einem ersten Permeat- bzw. Offgasausgang einen zusätzlichen, vom Gaseingang stromabwärts gelegenen Permeatausgang aufweist. Retentatseitig wird durch eine am oder nach dem Retentatausgang vorgesehene Druckregeleinrichtung ein Widerstand vorgesehen, wodurch die Membraneinheit im Bereich des zusätzlichen Permeatausgangs zumindest teilweise kontrolliert im Gleichstrom betrieben werden kann, während die Membraneinheit im Bereich des ersten Permeatausgangs, wie üblich, vorwiegend im Gegenstrom betrieben wird. Der zusätzliche, im Gleichstrom betreibbare Permeatausgang ist ansaugseitig mit einem der Membraneinheit vorgeschalteten Verdichter bzw. einer in den Verdichter führenden Gaszufuhr leitungsmäßig verbunden, sodass das im Gleichstrom gewonnene Permeat der Membraneinheit wieder als Feedgas zugeführt werden kann. Das im Gegenstrom gewonnene Permeat kann als Offgas abgezogen werden und das Retentat der Membraneinheit kann als Produktgas gewonnen werden. Die Vorrichtung gemäß EP 3 180 104 B1 ermöglicht so eine besonders effiziente Trennung eines hauptsächlich aus CH₄ und CO₂ bestehenden Gasgemisches, wobei eine niedrige Konzentration von CH₄ im hauptsächlich aus CO₂ bestehenden Offgas und eine hohe Recovery von CH₄ im Produktgas erreicht wird.

Selbst wenn die Vorrichtung gemäß EP 3 180 104 B1 bereits gute Ergebnisse bei der Trennung von Gasgemischen liefert, wäre es wünschenswert, wenn das darin beschriebene Trennungskonzept noch flexibler und vielseitiger eingesetzt werden könnte. Insbesondere wäre es wünschenswert, wenn auf diesem Trennungskonzept basierende Vorrichtungen einfacher in bestehende Vorrichtungen integriert werden könnten und auch einfacher in komplexeren, gegebenenfalls mehrstufigen Vorrichtungen genutzt werden könnten. Es ist daher eine Aufgabe der Erfindung, solche Vorrichtungen bereitzustellen.

Die Erfindung betrifft daher eine Vorrichtung zur Auftrennung eines Gasgemisches in Produktgas und Offgas mittels Gaspermeation mit einer ersten Membraneinheit, welche erste Membraneinheit einen Gaseingang, einen Retentatausgang und einen ersten Permeatausgang aufweist, wobei die Membraneinheit mindestens einen weiteren, vom Gaseingang stromabwärtsliegenden Permeatausgang aufweist und der stromabwärtsliegende Permeatausgang direkt oder indirekt mit dem Gaseingang der ersten Membraneinheit leitungsmäßig verbunden ist, sodass ein Gasstrom zumindest teilweise vom stromabwärtsliegenden Permeatausgang in den Gaseingang der Membraneinheit rückgeführt werden kann, wobei am oder nach dem Retentatausgang eine Druckregeleinrichtung vorgesehen ist, und wobei die Vorrichtung einen der Membraneinheit nachgeschalteten, vorzugsweise drehzahlregelbaren Verdichter aufweist, wobei der Verdichter ansaugseitig mit dem stromabwärtsliegenden Permeatausgang verbunden ist und zum Abzug des Permeats über den stromabwärtsliegenden Permeatausgang eingerichtet ist.

In einem weiteren Aspekt betrifft die Erfindung die Verwendung der erfindungsgemäßen Vorrichtung zur Trennung eines Gasgemisches mit einem Anteil im Gasgemisch von mehr als 50 Vol.-%, vorzugsweise mehr als 55 Vol.-%, 60 Vol.- %, 65 Vol.-%, 70 Vol.-%, 75 Vol.-%, 80 Vol.-%, 85 Vol.-%, insbesondere bevorzugt mehr als 90 Vol.-% bzw. 95 Vol.-% CH₄/CO₂ und mit einer Methankonzentration nicht über 30 Vol.-% in CH₄ als Produktgas und CO₂ als Offgas.

In einem weiteren Aspekt stellt die Erfindung ein Verfahren zur Auftrennung eines Gasgemisches mit einem Anteil im Gasgemisch von mehr als 50 Vol.- %, vorzugsweise mehr als 55 Vol.-%, 60 Vol.-%, 65 Vol.-%, 70 Vol.-%, 75 Vol.-%, 80 Vol.-%, 85 Vol.-%, insbesondere bevorzugt mehr als 90 Vol.-% bzw. 95 Vol.-% CH₄/CO₂ und mit einer Methankonzentration nicht über 30 Vol.-% in Produktgas und Offgas mittels Gaspermeation zur Verfügung, wobei das Permeat einer ersten Membraneinheit teilweise im Gleichstrom und teilweise im Gegenstrom gewonnen wird, das im Gegenstrom gewonnene Permeat als Offgas abgezogen wird, und weiters das Retentat der ersten Membraneinheit über einen Retentatausgang der ersten Membraneinheit und eine dort vorgesehene Druckregeleinrichtung abgezogen wird, wobei der Abzug des im Gleichstrom gewonnenen Permeats in Abhängigkeit von der Konzentration von CH₄ im Offgas gesteuert bzw. geregelt wird, wobei das im Gleichstrom gewonnene Permeat durch einen der ersten Membraneinheit nachgeschalteten, vorzugsweise drehzahlregelbaren Verdichter abgezogen wird.

Das Vorsehen des mit dem stromabwärtsliegenden Permeatausgang verbundenen und zum Abzug des im Gleichstrom gewonnenen Permeats eingerichteten Verdichters ermöglicht besonders flexible Einsatzmöglichkeiten und Ausgestaltungen der erfindungsgemäßen Vorrichtung. Der eigens dafür vorgesehen Verdichter erlaubt einen kontrollierten Abzug des im Gleichstrom gewonnenen Permeats über den stromabwärtsliegenden Permeatausgang, unabhängig vom Druck des Feedgases und insbesondere auch unabhängig davon, wie und zu welchem Teil das abgezogene Permeat in die erste Membraneinheit rückgeführt wird.

In der aus dem EP 3 180 104 B1 bekannten Vorrichtung bzw. dem daraus bekannten Verfahren wird das im Gleichstrom gewonnene Permeat einem der Membraneinheit vorgeschalteten Verdichter zugeführt und druckbeaufschlagt der Membraneinheit wieder als Feedgas zugeführt. Der Abzug des im Gleichstrom gewonnenen Permeats über den stromabwärtsliegenden Permeatausgang wird daher wesentlich durch den der Membraneinheit vorgeschalteten Verdichter bestimmt. Eine höhere Druckbeaufschlagung durch den Verdichter bedingt einen stärkeren Austritt des im Gleichstrom gewonnenen Permeats. Dies erschwert allerdings Anpassungen bzw. Erweiterungen der Vorrichtung im Bereich der Rückführung vom stromabwärtsliegenden Permeatausgang zum Gaseingang der Membraneinheit. Soll beispielsweise nur ein Teil des Permeats rückgeführt werden, zusätzliche Gasströme (gegebenenfalls in regelbaren Verhältnissen) der Membraneinheit zugeführt werden, oder auch weitere Membraneinheiten dem stromabwärtsliegenden Permeatausgang und dem Gaseingang zwischengeschaltet werden, würde das die Stärke des Austritts des im Gleichstrom gewonnenen Permeats verändern und so den Trennungsvorgang in der Membraneinheit beeinflussen bzw. Anpassungen erforderlich machen.

Durch den erfindungsgemäß vorgesehenen Verdichter, welcher mit dem stromabwärtsliegenden Permeatausgang verbunden ist, werden derartige Probleme verringert. Die erfindungsgemäße Vorrichtung kann im Bereich der Rückführung vom stromabwärtsliegenden Permeatausgang zum Gaseingang flexibel angepasst und erweitert werden, ohne dass der Abzug des im Gleichstrom gewonnenen Permeats beeinflusst wird. Beispielsweise kann das im Gleichstrom gewonnene Permeat direkt oder indirekt (z.B. über eine weitere Membraneinheit), zur Gänze oder nur zum Teil, oder auch nach Zusammenführen mit weiteren (frei regelbaren) Gasströmen rückgeführt werden, ohne dass der Trennungsvorgang innerhalb der Membraneinheit beeinflusst wird. Vereinfacht gesagt, macht der nachgeschaltete Verdichter die Membraneinheit unabhängiger davon, was vor dem Gaseingang passiert.

In einer bevorzugten Ausführungsform weist die erfindungsgemäße Vorrichtung eine zweite Membraneinheit mit einem Gaseingang, einem Retentatausgang und einem Permeatausgang auf, wobei der Permeatausgang der zweiten Membraneinheit mit dem Gaseingang der ersten Membraneinheit leitungsmäßig verbunden ist, wobei der zweiten Membraneinheit ein zweiter, vorzugsweise drehzahlregelbarer Verdichter vorgeschaltet ist, wobei der zweite Verdichter mit dem Gaseingang der zweiten Membraneinheit leitungsmäßig verbunden ist, wobei der Verdichter auslassseitig mit der in den zweiten Verdichter führenden Gaszufuhr leitungsmäßig verbunden ist und wobei der Retentatausgang der ersten Membraneinheit mit der in den zweiten Verdichter führenden Gaszufuhr leitungsmäßig verbunden ist. In einer entsprechenden bevorzugten Ausführungsform des erfindungsgemäßen Verfahrens werden das Retentat der ersten Membraneinheit und das im Gleichstrom gewonnen Permeat der ersten Membraneinheit druckbeaufschlagt und einer zweiten Membraneinheit als Feedgas zugeführt, wobei das Permeat der zweiten Membraneinheit der ersten Membraneinheit als Feedgas zugeführt wird und das Retentat der zweiten Membraneinheit über einen Retentatausgang der zweiten Membraneinheit abgezogen wird. Es hat sich gezeigt, dass das Vorsehen der zweiten Membraneinheit zu einer besonders guten Recovery im Produktgas und zu einem besonders reinen Offgas führt. Wird beispielsweise ein hauptsächlich aus CH₄ und CO₂ bestehendes Gasgemisch mit der Vorrichtung gemäß dieser Ausführungsform in CH₄ als Produktgas und CO₂ als Offgas getrennt, erfolgt eine erste Trennung von CH₄ und CO₂ bereits in der zweiten Membraneinheit. Das Permeat der zweiten Membraneinheit, welches der ersten Membraneinheit als Feedgas zugeführt wird, weist daher bereits eine reduzierte Konzentration von CH₄ auf. Das im Gegenstrom gewonnene Offgas der ersten Membraneinheit weist in diesem Fall eine besonders niedrige CH₄ Konzentration auf. Durch die Rückführung des Retentats und des im Gleichstrom gewonnenen Permeats der ersten Membraneinheit in die zweite Membraneinheit wird außerdem ein besonders hoher Anteil des im eingesetzten Gasgemisch vorhandenen CH₄ im als Produktgas abgezogenen Retentat der zweiten Membraneinheit erhalten.

In einer besonders bevorzugten Ausführungsform weist die erfindungsgemäße Vorrichtung weiters eine dritte Membraneinheit mit einem Gaseingang, einem Retentatausgang und einem Permeatausgang auf, wobei der Gaseingang der dritten Membraneinheit mit dem Retentatausgang der zweiten Membraneinheit leitungsmäßig verbunden ist, und wobei der Permeatausgang der dritten Membraneinheit mit der in den zweiten Verdichter führenden Gaszufuhr leitungsmäßig verbunden ist. Dementsprechend wird in einer bevorzugten Ausführungsform des erfindungsgemäßen Verfahrens das Retentat der zweiten Membraneinheit einer dritten Membraneinheit als Feedgas zugeführt, wobei das Permeat der dritten Membraneinheit druckbeaufschlagt und der zweiten Membraneinheit als Feedgas zugeführt wird und das Retentat der dritten Membraneinheit über einen Retentatausgang der dritten Membraneinheit abgezogen. Diese Ausführungsform hat den Vorteil, dass eine noch bessere Auftrennung des Gasgemisches ermöglicht wird. Dies wird unter anderem dadurch erreicht, dass das Retentat der zweiten Membraneinheit in der dritten Membraneinheit noch einmal aufgetrennt wird und das Permeat der zweiten Membraneinheit der zweiten Membraneinheit wieder als Feedgas zugeführt wird. CO₂, welches noch im Retentat der zweiten Membraneinheit enthalten sein könnte, kann somit über das Permeat der dritten Membraneinheit und in der Folge über das Permeat der zweiten Membraneinheit in die erste Membraneinheit gelangen, worin es über das im Gegenstrom gewonnene Permeat ins Offgas gelangen kann.

Vorzugsweise ist am oder nach dem Retentatausgang der dritten Membraneinheit eine weitere Druckregeleinrichtung vorgesehen. Im Zusammenhang mit dem erfindungsgemäßen Verfahren ist es bevorzugt, dass das Retentat der dritten Membraneinheit über eine am oder nach dem Retentatausgang der dritten Membraneinheit vorgesehene weitere Druckregeleinrichtung abgezogen wird. Dies ermöglicht es, den Druck bzw. den Widerstand innerhalb der dritten Membraneinheit noch genauer zu steuern.

Im Zusammenhang mit der Erfindung wird vorzugsweise ein hauptsächlich aus CH₄/CO₂ bestehendes Gasgemisch mit einer Methankonzentration nicht über 30 Vol.-% eingesetzt (wobei "hauptsächlich" für den Zweck der vorliegenden Erfindung einen Anteil im Gasgemisch von mehr als 50 Vol.-%, vorzugsweise mehr als 55 Vol.-%, 60 Vol.-%, 65 Vol.-%, 70 Vol.-%, 75 Vol.-%, 80 Vol.-%, 85 Vol.-%, insbesondere bevorzugt mehr als 90 Vol.-% bzw. 95 Vol.-%, bedeutet). Beispielsweise kann es sich bei dem Gasgemisch um Schwachgas, Grubengas oder Biogas handeln.

Möglichkeiten für die Ausgestaltung und Steuerung der in der erfindungsgemäßen Vorrichtung vorgesehenen ersten Membraneinheit sind aus dem EP 3 180 104 B1 bekannt. Durch die Kombination von Druckregeleinrichtung und bestimmtem Gasgemisch, welche einerseits die Methankonzentration im Feedgas beschränkt und gleichzeitig durch die Druckregeleinrichtung für das Retentat einen Widerstand im Retentatraum vorsieht und beispielsweise durch ein Ventil oder Stellventil, die Ansaugseite eines vorzugsweise drehzahlregelbaren Verdichters oder (ebenfalls vorzugsweise drehzahlregelbaren) Kompressors oder eine Zuleitung in eine Stufe eines vorzugsweise drehzahlregelbaren mehrstufigen Verdichters oder Kompressors dargestellt sein kann, ist es möglich, die Druckregeleinrichtung den Vorgaben entsprechend mehr oder weniger zu schließen bzw. einen Widerstand durch die Drehzahl des Verdichters oder Kompressors zu geben oder durch Regelung bzw. Steuerung der Drehzahl des Verdichters oder Kompressors einzustellen. Ein Schließen des Regelventil ist dabei nicht notwendigerweise mit einer Druckerhöhung im Retentatraum verbunden, so kann beispielsweise zusammen mit der Schließung des Regelventils eine Verringerung des Druckes des in die erste Membraneinheit geleiteten Feedgases einhergehen, wodurch der Druck im Retentatraum letztendlich gleich bleibt und nicht erhöht wird. Wichtig ist nur, dass in der ersten Membraneinheit retentatseitig ein Widerstand für das dort vorhandene Gasgemisch vorgesehen werden kann. Dadurch kann die erste Membraneinheit im Bereich des zweiten, vom Gaseingang stromabwärts gelegenen Permeatausgang zumindest teilweise kontrolliert im Gleichstrom betrieben werden, während die erste Membraneinheit im Bereich des ersten Permeatausgangs, wie üblich, vorwiegend im Gegenstrom betrieben wird. "Zumindest teilweise" bzw. "vorwiegend" bedeuten dabei nicht, dass an beiden Permeatausgängen zugleich Gleichstrom und Gegenstrom herrscht (was technisch unmöglich ist), sondern dass das am jeweiligen Permeatausgang austretende Permeat aus einem Bereich der Membran stammt, welcher, je nach den gewählten Bedingungen, eben permeatseitig entweder in Gleich- oder im Gegenstrom zur retentatseitigen Strömungsrichtung betrieben wurde. Gegenüber einem einzigen im Gegenstrom betriebenen Permeatausgang führt dies zu wesentlichen Verbesserungen beim Betrieb der Vorrichtung, hauptsächlich hinsichtlich einer Verringerung der Konzentration an Produktgas im Offgas aber auch hinsichtlich einer Erhöhung der Menge an Produktgas. So kann bei der Trennung eines hauptsächlich aus CH₄/CO₂ bestehenden Gasgemisches, beispielsweise Schwachgas, Grubengas oder Biogas, in CH₄ als Produktgas und hauptsächlich CO₂ als Offgas eine hohe Recovery an CH₄ im Produktgas erreicht werden. Durch die in bevorzugten Ausführungsformen vorgesehene zweite und/oder dritte Membraneinheit kann die Recovery sogar noch weiter gesteigert werden. Vorzugsweise beträgt die Recovery von CH₄ im Produktgas mehr als 98%, bevorzugt mehr als 99%, insbesondere mehr als 99,5%.

Selbstverständlich kann, beispielsweise bei Vorsehen von Sensoren an geeigneter Stelle in der erfindungsgemäßen Vorrichtung, die Druckregeleinrichtung auch automatisiert betrieben werden, indem die Druckregeleinrichtung mittels einer Steuereinrichtung zur Einhaltung eines vorgegebenen, an einem oder mehreren Stellen innerhalb oder außerhalb der erfindungsgemäßen Vorrichtung gemessenen Grenzwertes geöffnet bzw. geschlossen wird. Der Grenzwert kann beispielsweise die Methankonzentration im Offgas sein, wobei in dem Fall der Sensor ein an oder nahe beim ersten Permeatausgang der ersten Membraneinheit vorgesehener Gassensor sein kann. Beispielsweise ist für die Freisetzung von Methan (Produktgas bzw. Retentat bei der Trennung von Biogas mittels Gaspermeation) in Deutschland die maximal emittierbare Methanmenge im Abgas auf 0,2 Vol.-% der im Biogasprozess produzierten Methanmasse begrenzt, wobei das Einhalten dieses Grenzwerts beispielsweise durch die erfindungsgemäße Vorrichtung bei Vorsehen einer Steuereinrichtung auch automatisiert vorgesehen werden kann. Dadurch, dass der stromabwärtsliegende Permeatausgang der ersten Membraneinheit direkt oder indirekt mit dem Gaseingang der ersten Membraneinheit leitungsmäßig verbunden ist, wird vorgesehen, dass das Permeat der ersten Membraneinheit zumindest teilweise vom stromabwärtsliegenden Permeatausgang in die erste Membraneinheit rückgeführt werden kann. Idealerweise kann ein die erfindungsgemäße Vorrichtung über den ersten Permeatausgang der ersten Membraneinheit verlassendes Offgas (CO₂) ohne weitere Reinigung bezüglich des enthaltenen Methan direkt emittiert bzw. weiterverwendet werden.

Gemäß einer bevorzugten Ausführungsform der vorliegenden Erfindung ist vorgesehen, dass am oder nach dem ersten Permeatausgang ein vorzugsweise drehzahlregelbarer Verdichter und/oder eine Druckregeleinrichtung vorgesehen ist bzw. sind. Durch das Vorsehen einer Druckregeleinrichtung, beispielsweise eines Ventils oder Stellventils, kann bei Verringerung des Durchflusses durch das Ventil im Permeatraum der ersten Membraneinheit ein Rückstau erzeugt werden, wodurch sich die im Gleichstrom betriebene Fläche der Trennmembran vergrößert. Wird andererseits am oder nach dem ersten Permeatausgang ein vorzugsweise drehzahlregelbarer Verdichter betrieben, erhöht sich der Abzug von Offgas aus dem ersten Permeatausgang und die im Gleichstrom betriebene Fläche der Trennmembran verringert sich. Beim Vorsehen von sowohl Druckregeleinrichtung als auch vorzugsweise drehzahlregelbaren Verdichter kann die erfindungsgemäße Vorrichtung somit in jede Richtung gesteuert werden.

Erfindungsgemäß ist es bevorzugt, dass der der ersten Membraneinheit nachgeschaltete Verdichter und/oder die am oder nach dem Retentatausgang vorgesehene Druckregeleinrichtung mit einer Steuereinrichtung verbunden sind. Bei Vorsehen von beispielsweise einem Gassensor im Bereich des ersten Permeatausgangs, welcher Gassensor beispielsweise die Konzentration an Produktgas (z.B. CH₄) im Offgas direkt oder indirekt messen kann, ist es wie bereits zuvor erwähnt möglich, die erfindungsgemäße Vorrichtung derart zu betreiben, dass ein vorgegebener Produktgasanteil im Offgas nicht überschritten wird.

In einer weiteren bevorzugten Ausführungsform ist bzw. sind der am oder nach dem ersten Permeatausgang vorgesehene Verdichter und/oder die am oder nach dem ersten Permeatausgang vorgesehene Druckregeleinrichtung mit einer bzw. der Steuereinrichtung verbunden. Bei Vorsehen von beispielsweise einem Gassensor im Bereich des ersten Permeatausgangs, welcher Gassensor beispielsweise die Konzentration an Produktgas im Offgas direkt oder indirekt messen kann, ist es wie bereits zuvor erwähnt möglich, die erfindungsgemäße Vorrichtung derart zu betreiben, dass ein vorgegebener Produktgasanteil im Offgas nicht überschritten wird.

Sämtliche Prozent-Angaben (%) hierin beziehen sich, wenn nicht anders gekennzeichnet, auf Volumenprozent. Unter einem "Anteil im Gasgemisch von mehr als x Vol.-% CH₄/CO₂" wird hierin verstanden, dass der die Summe der Anteile von CH₄ und CO₂ im Gasgemisch mehr als x Vol.-% beträgt.

Die vorliegende Erfindung wird nun unter Bezugnahme auf die beiliegenden Figuren näher erklärt.
Fig. 1 zeigt ein Blockschaltbild einer erfindungsgemäßen Vorrichtung.
Fig. 2 zeigt ein Blockschaltbild einer bevorzugten Ausführungsform der erfindungsgemäßen Vorrichtung aufweisend eine erste und eine zweite Membraneinheit.
Fig. 3 zeigt ein Blockschaltbild einer weiteren bevorzugten Ausführungsform der erfindungsgemäßen Vorrichtung aufweisend eine erste, eine zweite und eine dritte Membraneinheit.

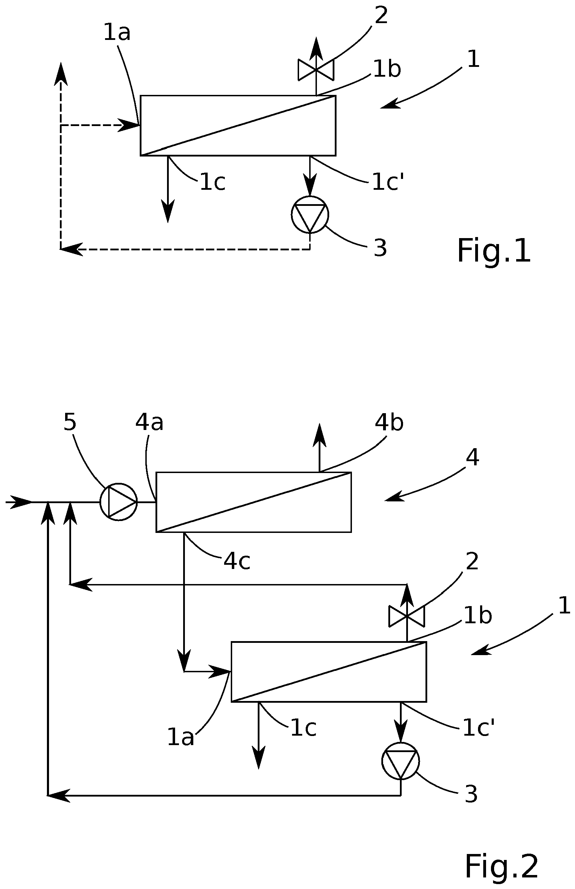

Die in Fig. 1 gezeigte Vorrichtung weist eine erste Membraneinheit 1 mit einem Gaseingang 1a, einem Retentatausgang 1b, einem ersten Permeatausgang 1c und einen weiteren, vom Gaseingang 1a stromabwärtsliegenden Permeatausgang 1c' auf. In der Membraneinheit 1 wird im Gegenstrombereich anfallendes Offgas über der Permeatausgang 1c abgeführt. Im Gleichstrombereich über Permeatausgang 1c' und mittels des Verdichters 3 abgesaugtes Permeat wird direkt oder indirekt der ersten Membraneinheit 1 wieder als Feedgas zugeführt (in Fig. 1 als strichlierte Linien angedeutet). Dadurch wird über Gaseingang 1a, Permeatausgang 1c' und Verdichter 3 in der Membraneinheit 1 im Gleichstrombereich abgetrenntes Permeat zumindest teilweise im Kreislauf geführt. Produktgas wird über den Retentatausgang 1b abgeführt, wobei die dort vorgesehene Druckregeleinrichtung 2 dazu dient, den Druck im Retentatraum der Membraneinheit 1 zu erhöhen, wodurch der erfindungsgemäße Betrieb der Trennmembran im teilweisen Gleichstrom kontrollierbar wird.

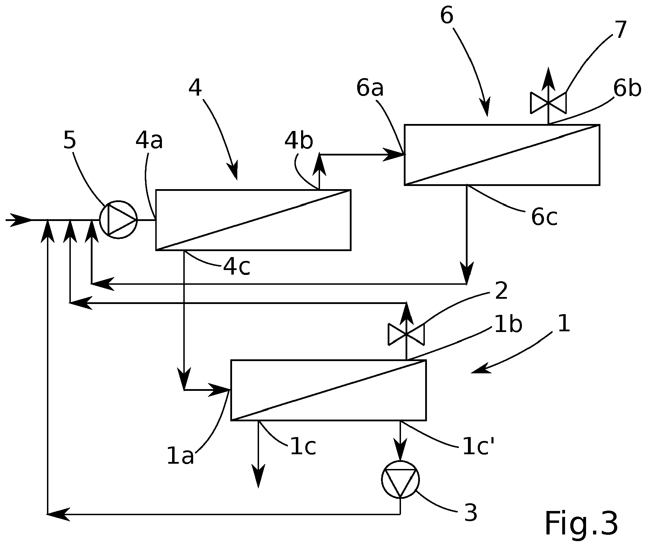

Dadurch, dass erfindungsgemäß ein dem stromabwärtsliegenden Permeatausgang 1c' nachgeschalteten Verdichter 3 vorgesehen ist, kann der Abzug des im Gleichstrom gewonnenen Permeats über den stromabwärtsliegenden Permeatausgang (1c') unabhängig vom Druck des Feedgases und auch unabhängig davon, wie und zu welchem Teil das abgezogene Permeat in die erste Membraneinheit rückgeführt wird, erfolgen. Die Vorrichtung kann so im Bereich der Rückführung vom stromabwärtsliegenden Permeatausgang zum Gaseingang der ersten Membraneinheit flexibel angepasst und erweitert werden, wie in den bevorzugten Ausführungsformen gemäß Fig. 2 und 3 gezeigt.

Hinsichtlich Fig. 1 gilt unabhängig davon, wo genau die Permeatausgänge zueinander platziert sind (abgesehen davon, dass der stromabwärtsliegende Permeatausgang 1c' zwingend stromabwärts vom Gaseingang 1a sein muss) folgendes:
Bezüglich dem ersten Permeatausgang 1c wird ein vom linken Bereich (vom Ausgang 1c aus gesehen) des Permeatraums stammendes Permeat im Gleichstrom gewonnen, da die Strömungsrichtung des Retentats von Gaseingang 1a zum Retentatausgang 1b gleich ist mit der Strömungsrichtung vom linken Bereich des Permeatraums zum ersten Permeatausgang 1c. Andererseits wird ein vom rechten Bereich (vom Ausgang 1c aus gesehen) des Permeatraums stammendes Permeat im Gegenstrom gewonnen, da die Strömungsrichtung des Retentats von Gaseingang 1a zum Retentatausgang 1b entgegengesetzt ist zur Strömungsrichtung vom rechten Bereich des Permeatraums zum ersten Permeatausgang 1c.

Ähnliches gilt bezüglich dem stromabwärtsliegenden Permeatausgang 1c', dort wird ein vom linken Bereich (vom Ausgang 1c' aus gesehen) des Permeatraums stammendes Permeat ebenfalls im Gleichstrom gewonnen, da die Strömungsrichtung des Retentats von Gaseingang 1a zum Retentatausgang 1b gleich ist mit der Strömungsrichtung vom linken Bereich des Permeatraums zum stromabwärtsliegenden Permeatausgang 1c'. Andererseits wird ein vom rechten Bereich (vom stromabwärtsliegenden Permeatausgang 1c' aus gesehen) des Permeatraums stammendes Permeat im Gegenstrom gewonnenen, da die Strömungsrichtung des Retentats von Gaseingang 1a zum Retentatausgang 1b entgegengesetzt ist zur Strömungsrichtung vom rechten Bereich des Permeatraums zum stromabwärtsliegenden Permeatausgang 1c'.

Es versteht sich von selbst, dass an keinem Permeatausgang ein Permeat vorhanden sein kann, welches von Bereichen der Membran stammt, welche ausschließlich in Gleich- bzw. ausschließlich im Gegenstrom betrieben wurden. Im Rahmen der Erfindung stammt beim stromabwärtsliegenden Permeatausgang 1c' abgesaugtes Permeat aber vorzugsweise mehrheitlich (d.h. mehr als die Hälfte) von Bereichen der Membran, welche im Gleichstrom betrieben wurden. Ebenso stammt beim ersten Permeatausgang 1c erhaltenes Permeat vorzugsweise mehrheitlich (d.h. mehr als die Hälfte) von Bereichen der Membran, welche im Gegenstrom betrieben wurden.

Die in Fig. 2 gezeigte Ausführungsform der erfindungsgemäßen Vorrichtung weist eine zweite Membraneinheit 4 mit einem Gaseingang 4a, einem Retentatausgang 4b und einem Permeatausgang 4c auf. Der Permeatausgang 4c der zweiten Membraneinheit 4 ist mit dem Gaseingang 1a der ersten Membraneinheit 1 leitungsmäßig verbunden, sodass das Permeat der zweiten Membraneinheit 4 der ersten Membraneinheit 1 als Feedgas zugeführt werden kann. In der gezeigten Ausführungsform ist der Verdichter 3 auslassseitig mit der in einen zweiten, der zweiten Membraneinheit 4 vorgeschalteten Verdichter 5 führenden Gaszufuhr leitungsmäßig verbunden, sodass das im Gleichstrom gewonnen Permeat der ersten Membraneinheit 1 druckbeaufschlagt und der zweiten Membraneinheit 4 als Feedgas zugeführt werden kann. Darüber hinaus ist auch der Retentatausgang 1b der ersten Membraneinheit 1 mit der in den zweiten Verdichter 5 führenden Gaszufuhr leitungsmäßig verbunden, sodass auch das Retentat der ersten Membraneinheit 1 der zweiten Membraneinheit 4 als Feedgas zugeführt werden kann. Durch die Membraneinheit 1 kann das Permeat der zweiten Membraneinheit 4 daher weiter aufgetrennt, was zu einem besonders reinen Offgas führt.

Die Erfindung ermöglicht es somit, eine herkömmliche Gaspermeationseinheit, welche eine unerwünscht hohe Konzentration von Produktgas (z.B. CH₄) im Offgas aufweist, aufzurüsten, um eine bessere Reinigung des Offgases zu erzielen. Ausgehend von einer herkömmlichen Gaspermeationseinheit in Form der Membraneinheit 4, kann der Permeatausgang 4c (d.h. der frühere Offgasausgang) mit dem Gaseingang 1a der ersten Membraneinheit 1 verbunden werden. In der Membraneinheit 1 erfolgt eine weitere Auftrennung, wobei Retentat und im Gleichstrom gewonnenes Permeat der zweiten Membraneinheit 4 als Feedgas rückgeführt werden und das besonders reine, im Gegenstrom gewonnene Permeat, als Offgas über den ersten Permeatausgang 1c erhalten wird.

Die in Fig. 2 gezeigte Ausführungsform kann mit zusätzlichen Membraneinheiten erweitert werden, um eine sogar noch bessere Trennung von Produktgas und Offgas zu ermöglichen. Eine entsprechende bevorzugte Ausführungsform ist in Fig. 3 gezeigt. Darin weist die erfindungsgemäße Vorrichtung eine der zweiten Membraneinheit 4 nachgeschaltete dritte Membraneinheit 6 mit einem Gaseingang 6a, einem Retentatausgang 6b und einem Permeatausgang 6c auf. Das Retentat der zweiten Membraneinheit 4 wird der dritten Membraneinheit 6 als Feedgas zugeführt. Der Permeatausgang 6c der dritten Membraneinheit 6 ist mit der in den zweiten Verdichter 5 führenden Gaszufuhr leitungsmäßig verbunden, wodurch das Permeat der dritten Membraneinheit 6 der zweiten Membraneinheit 4 als Feedgas zugeführt wird. Das Retentat der dritten Membraneinheit 6 wird über den Retentatausgang 6b als Produktgas abgezogen. Das Retentat der zweiten Membraneinheit 4 wird somit noch einmal zusätzlich aufgetrennt. Am oder nach dem Retentatausgang 6b der dritten Membraneinheit 6 kann dabei eine weitere Druckregeleinrichtung 7 vorgesehen sein, wodurch der Druck in der dritten Membraneinheit noch genauer kontrolliert werden kann.

## Patentansprüche

1. Vorrichtung zur Auftrennung eines Gasgemisches in Produktgas und Offgas mittels Gaspermeation mit einer ersten Membraneinheit (1),
welche erste Membraneinheit (1) einen Gaseingang (1a), einen Retentatausgang (1b) und einen ersten Permeatausgang (1c) aufweist,
wobei die erste Membraneinheit (1) mindestens einen weiteren, vom Gaseingang (1a) stromabwärtsliegenden Permeatausgang (1c') aufweist und
der stromabwärtsliegende Permeatausgang (1c') direkt oder indirekt mit dem Gaseingang (1a) der ersten Membraneinheit (1) leitungsmäßig verbunden ist, sodass ein Gasstrom zumindest teilweise vom stromabwärtsliegenden Permeatausgang (1c') in den Gaseingang (1a) der ersten Membraneinheit (1) rückgeführt werden kann,
wobei am oder nach dem Retentatausgang (1b) eine Druckregeleinrichtung (2) vorgesehen ist,
**dadurch gekennzeichnet, dass**
die Vorrichtung einen der ersten Membraneinheit (1) nachgeschalteten, vorzugsweise drehzahlregelbaren Verdichter (3) aufweist, wobei der Verdichter (3) ansaugseitig mit dem stromabwärtsliegenden Permeatausgang (1c') verbunden ist und zum Abzug des Permeats über den stromabwärtsliegenden Permeatausgang (1c') eingerichtet ist.

2. Vorrichtung nach Anspruch 1, **dadurch gekennzeichnet, dass** die Vorrichtung eine zweite Membraneinheit (4) mit einem Gaseingang (4a), einem Retentatausgang (4b) und einem Permeatausgang (4c) aufweist, wobei
der Permeatausgang (4c) der zweiten Membraneinheit (4) mit dem Gaseingang (1a) der ersten Membraneinheit (1) leitungsmäßig verbunden ist,
wobei der zweiten Membraneinheit (4) ein zweiter, vorzugsweise drehzahlregelbarer Verdichter (5) vorgeschaltet ist, wobei der zweite Verdichter (5) mit dem Gaseingang (4a) der zweiten Membraneinheit (4) leitungsmäßig verbunden ist,
wobei der Verdichter (3) auslassseitig mit der in den zweiten Verdichter (5) führenden Gaszufuhr leitungsmäßig verbunden ist und wobei der Retentatausgang (1b) der ersten Membraneinheit (1) mit der in den zweiten Verdichter (5) führenden Gaszufuhr leitungsmäßig verbunden ist.

3. Vorrichtung nach Anspruch 2, **dadurch gekennzeichnet, dass** die Vorrichtung eine dritte Membraneinheit (6) mit einem Gaseingang (6a), einem Retentatausgang (6b) und einem Permeatausgang (6c) aufweist, wobei
der Gaseingang (6a) der dritten Membraneinheit (6) mit dem Retentatausgang (4a) der zweiten Membraneinheit (4) leitungsmäßig verbunden ist, und
wobei der Permeatausgang (6c) der dritten Membraneinheit (6) mit der in den zweiten Verdichter (5) führenden Gaszufuhr leitungsmäßig verbunden ist.

4. Vorrichtung nach Anspruch 4, **dadurch gekennzeichnet, dass** am oder nach dem Retentatausgang (6b) der dritten Membraneinheit (6) eine weitere Druckregeleinrichtung (7) vorgesehen ist.

5. Verwendung der Vorrichtung nach einem der Ansprüche 1 bis 4 zur Trennung eines Gasgemisches mit einem Anteil im Gasgemisch von mehr als 50 Vol.-%, vorzugsweise mehr als 55 Vol.-%, 60 Vol.- %, 65 Vol.-%, 70 Vol.-%, 75 Vol.-%, 80 Vol.-%, 85 Vol.-%, insbesondere bevorzugt mehr als 90 Vol.-% bzw. 95 Vol.-% CH₄/CO₂ und mit einer Methankonzentration nicht über 30 Vol.-% in CH₄ als Produktgas und CO₂ als Offgas.

6. Verfahren zur Auftrennung eines Gasgemisches mit einem Anteil im Gasgemisch von mehr als 50 Vol.- %, vorzugsweise mehr als 55 Vol.-%, 60 Vol.-%, 65 Vol.-%, 70 Vol.-%, 75 Vol.-%, 80 Vol.-%, 85 Vol.-%, insbesondere bevorzugt mehr als 90 Vol.-% bzw. 95 Vol.-% CH₄/CO₂ und mit einer Methankonzentration nicht über 30 Vol.-% in Produktgas und Offgas mittels Gaspermeation, wobei das Permeat einer ersten Membraneinheit (1) teilweise im Gleichstrom und teilweise im Gegenstrom gewonnen wird, das im Gegenstrom gewonnene Permeat als Offgas abgezogen wird, und weiters das Retentat der ersten Membraneinheit (1) über einen Retentatausgang (1b) der ersten Membraneinheit (1) und eine dort vorgesehene Druckregeleinrichtung (2) abgezogen wird, wobei der Abzug des im Gleichstrom gewonnenen Permeats in Abhängigkeit von der Konzentration von CH₄ im Offgas gesteuert bzw. geregelt wird, **dadurch gekennzeichnet, dass** das im Gleichstrom gewonnene Permeat durch einen der ersten Membraneinheit (1) nachgeschalteten, vorzugsweise drehzahlregelbaren Verdichter (3) abgezogen wird.

7. Verfahren nach Anspruch 6, **dadurch gekennzeichnet, dass** das Retentat der ersten Membraneinheit (1) und das im Gleichstrom gewonnen Permeat der ersten Membraneinheit (1) druckbeaufschlagt und einer zweiten Membraneinheit (4) als Feedgas zugeführt werden, wobei das Permeat der zweiten Membraneinheit (4) der ersten Membraneinheit (1) als Feedgas zugeführt wird und das Retentat der zweiten Membraneinheit (4) über einen Retentatausgang (4b) der zweiten Membraneinheit (4) abgezogen wird.

8. Verfahren nach Anspruch 7, **dadurch gekennzeichnet, dass** das Retentat der zweiten Membraneinheit (4) einer dritten Membraneinheit (6) als Feedgas zugeführt wird, wobei das Permeat der dritten Membraneinheit (6) druckbeaufschlagt und der zweiten Membraneinheit (4) als Feedgas zugeführt wird und das Retentat der dritten Membraneinheit (6) über einen Retentatausgang (6b) der dritten Membraneinheit (6) abgezogen wird.

9. Verfahren nach Anspruch 8, **dadurch gekennzeichnet, dass** das Retentat der dritten Membraneinheit (6) über eine am oder nach dem Retentatausgang (6b) der dritten Membraneinheit (6) vorgesehene weitere Druckregeleinrichtung (7) abgezogen wird.
